# EUROPÄISCHE PATENTSCHRIFT

(11) **EP 4 400 768 B1**
(45) Veröffentlichungstag und Bekanntmachung des Hinweises auf die Patenterteilung: **02.09.2026**
(21) Anmeldenummer: 24150134.5
(22) Anmeldetag: 03.01.2024
(51) Int. Cl.: F23N 5/14, G01F 1/698

(54) **VERFAHREN ZUM BESTIMMEN EINER DURCHFLUSSMENGE VERBRENNUNGSLUFT IN EINEM HEIZGERÄT, VERFAHREN ZUM BETREIBEN EINES HEIZGERÄTES, COMPUTERPROGRAMM, REGEL- UND STEUERGERÄT, HEIZGERÄT**
METHOD FOR DETERMINING A FLOW RATE OF COMBUSTION AIR IN A HEATING DEVICE, METHOD FOR OPERATING A HEATING DEVICE, CONTROL DEVICE, HEATING DEVICE
PROCÉDÉ DE DÉTERMINATION D'UN DÉBIT D'AIR DE COMBUSTION DANS UN APPAREIL DE CHAUFFAGE, PROCÉDÉ DE FONCTIONNEMENT D'UN APPAREIL DE CHAUFFAGE, PROGRAMME INFORMATIQUE, APPAREIL DE RÉGLAGE

(30) Priorität: 09.01.2023 DE 102023100272
(43) Veröffentlichungstag der Anmeldung: 17.07.2024
(73) Patentinhaber: Vaillant GmbH, 42859 Remscheid NRW (DE)
(72) Erfinder: Krah, Timo, 42109 Wuppertal (DE)
(74) Vertreter: Popp, Carsten

(56) Entgegenhaltungen:
- EP-A1- 0 698 786
- DE-A1- 10 335 307
- DE-A1- 102020 126 992
- US-A1- 2010 138 052
- US-B2- 10 502 418

## Beschreibung

Die Erfindung betrifft ein Verfahren zum Bestimmen einer Durchflussmenge Verbrennungsluft in einem Heizgerät, ein Verfahren zum Betreiben eines Heizgerätes, ein Computerprogramm, ein Regel- und Steuergerät und ein Heizgerät.

Es sind eine Vielzahl von Heizgeräten bekannt, die in einer Brennkammer ein Gemisch aus einem Brennstoff, insbesondere Gas oder Wasserstoff und Umgebungsluft verbrennen, um Wärme zur Versorgung eines Gebäudes oder für eine Bereitstellung von Warmwasser zu gewinnen.

Häufig weisen die Geräte eine Fördereinrichtung, zumeist ein Gebläse, auf, um einen Massestrom Verbrennungsluft zu fördern, dem ein, einem vorgegebenen Verbrennungsluftverhältnis (Lambda, Luftzahl) entsprechender, Massestrom Brennstoff zugesetzt werden kann. Zu Regelung des Verbrennungsluftverhältnisses wird somit regelmäßig ein erfasster Massestrom Verbrennungsluft genutzt, um den zuzusetzenden Massestrom Brennstoff zu bestimmen. Eine robuste Bestimmung des zugeführten Massestromes Verbrennungsluft ist sicherheitsrelevant für derartige Heizgeräte, Abweichungen des erfassten Massestromes Verbrennungsluft vom Istwert können eine Verschiebung des Verbrennungsluftverhältnisses zur Folge haben, die beispielsweise Flammenrückschläge begünstigen oder auch einen Zündvorgang erschweren oder verhindern.

Es besteht daher ein Bedürfnis nach einer sicheren und/oder einfachen Bestimmung eines einem Heizgerät zugeführten Massestromes Verbrennungsluft, um eine robuste Regelung des Verbrennungsluftverhältnisses zu gewährleisten.

Hierzu wird in der WO 2007/ 0643114 A2 eine Vorrichtung zur Bestimmung und/ oder Überwachung des Massedurchflusses eines gasförmigen Mediums vorgeschlagen, bei der in einem Messrohr zwei Temperatursensoren angeordnet sind und eine Auswerteeinheit unter Einbeziehung einer weiteren Prozessgröße den Massedurchfluss des gasförmigen Mediums bestimmt. Diese Lösung ist für einen Einsatz bei einem Heizgerät jedoch ungeeignet, da zusätzliche Sensorik notwendig ist und die weitere Prozessgröße aufwendig zu bestimmen ist.

Die DE 10 2020 126 992 A1 beschreibt ein Verfahren und eine Vorrichtung zum sicheren Betrieb eines mit hohem Wasserstoffanteil betriebenen Brenners. Dabei wird vorgeschlagen, einen ersten und einen zweiten Temperatursensors, die in einer Brennkammer angeordnet sind, zur Verifikation eines Signals eines Massenstromsensors zu nutzen. Die beiden Temperatursensoren werden hierzu redundant verwendet, um einen Ausfall oder Drift zu kompensieren.

Die auf einem anderen Gebiet liegende DE 10 335 307 A1 hat ein Verfahren zum Steuern und Kalibrieren eines Brennluftmassestromes bei einem Fahrzeugheizgerät zum Gegenstand. Bei dem Kalibrierverfahren wird im Rahmen der Endmontage ein fertiggestelltes Heizgerät in Betrieb gesetzt und das Brennluftgebläse so eingestellt, dass eine optimale Verbrennung gewährleistet ist. Dabei wird ein Glühstift des einzustellenden Heizgerätes bestromt und auf einen Nennpunkt eingestellt, und am Nennpunkt die abgeführte Wärmemenge mit Hilfe des Signals des Glühstiftes als Maß für den Brennluftmassestrom ermittelt. Bei einem Start des Heizgerätes kann nunmehr der Brennluftmassestrom im Vorfeld der Zuführung von Brennstoff mittels des Glühstiftes eingestellt bzw. verifiziert werden. Nachteilig ist dieses Verfahren nicht auf modulierende Heizgeräte übertragbar.

Die DE 10 2020 126 992 A1 beschreibt einen mit hohem Wasserstoffanteil betriebenen Brenner, mit einer Flammenüberwachung umfassend einen Temperatursensor. Zudem weist das Heizgerät jeweils einen Massenstromsensor für Verbrennungsluft und Brenngas auf. Es wird vorgeschlagen, die Luftzufuhr während des Betriebes kurzzeitig zu erhöhen und die Reaktion des Signals des Temperatursensors zu erfassen, um ein Lambda der Verbrennung einzustellen. Ein derartiger Brenner ist aufwendig und wartungsanfällig.

Die DE 103 35 307 A1 offenbart ein Verfahren zum Steuern des Brennluftmassenstroms bei einem Heizgerät. Dabei wird die am Glühstift pro Zeiteinheit abgeführte Wärmemenge ermittelt und darauf basierend die pro Zeiteinheit geförderte Brennluftmasse ermittelt. Dieses Verfahren ist nicht ausreichend exakt.

Hiervon ausgehend ist es Aufgabe der Erfindung, ein Verfahren zum Bestimmen einer Durchflussmenge Verbrennungsluft in einem Heizgerät, ein Verfahren zum Betreiben eines Heizgerätes, ein Computerprogramm, ein Regel- und Steuergerät, ein Heizgerät vorzuschlagen, die die geschilderten Probleme des Standes der Technik zumindest teilweise überwinden. Insbesondere soll ein robustes Bestimmen der Durchflussmenge ermöglich werden, die eine sichere Regelung eines Verbrennungsluftverhältnisses eines Heizgerätes sicherstellen kann.

Zudem soll die Erfindung die Komplexität eines Heizgerätes zumindest nicht wesentlich erhöhen, sowie keine oder nur geringe bauliche Veränderungen an einem Heizgerät erfordern.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Bestimmen einer Durchflussmenge Verbrennungsluft in einem Heizgerät bei. Dabei weist das Heizgerät einen Brenner auf, dem ein Gemisch aus Brenngas und Verbrennungsluft über einen Gemischkanal mittels einer Fördereinrichtung zugeführt wird und mindestens einen elektrisch beheizbaren Temperatursensor, derart angeordnet, dass eine Temperatur einer Flamme des Heizgerätes erfasst werden kann. Bei dem Verfahren werden
- mindestens zwei (elektrische) Widerstandswerte mindestens eines Temperatursensors erfasst, wobei der mindestens eine Temperatursensor beim Erfassen der mindestens zwei Widerstandswerte mit jeweils abweichender Leistung beaufschlagt wird, und
- einer Durchflussmenge Verbrennungsluft durch Auswerten der mindestens zwei Widerstandswerte bestimmt, wobei mindestens ein Temperatursensor mit einer alternierenden Funktion als Leistungsfunktion beaufschlagt und eine Widerstandsfunktion erfasst wird und die alternierende Funktion eine Winkelfunktion ist und eine Amplitude und Phasenverschiebung zwischen der Leistungsfunktion und der Widerstandsfunktion ausgewertet wird..

Das Verfahren kann während des Betreibens eines Heizgerätes permanent, dauerhaft durchgeführt werden. Zur Verifikation eines anderweitig bestimmten Massestromes Verbrennungsluft kann das Verfahren auch zeitlich beabstandet wiederholt werden. Das Verfahren dient insbesondere einem sicheren Betrieb eines Heizgerätes durch ein robustes Bestimmen eines Massestromes Verbrennungsluft.

Bei dem Heizgerät handelt es sich insbesondere um ein Gasheizgerät, das dazu eingerichtet ist, ein Brenngas, wie Erdgas oder insbesondere Wasserstoff unter Zufuhr von Umgebungsluft (Verbrennungsluft) zu verbrennen und Wärmeenergie, beispielsweis zur Erwärmung eines Wärmeträgers eines Heizkreislaufes oder auch zur Bereitstellung einer Warmwasserversorgung, zu erzeugen. Insbesondere kann es sich bei dem Heizgerät um ein Brennwertgerät handeln. Das Heizgerät weist in der Regel eine Fördereinrichtung bzw. ein Gebläse auf, die ein Gemisch von Brennstoff und Verbrennungsluft über einen Gemischkanal (Gemischgaskanal, Gemischzuführung) einem in einer Brennkammer angeordneten Brenner zuführen kann. Die Verbrennungsprodukte können anschließend durch einen Abgaskanal des Heizgerätes einer Abgasanlage zugeführt werden. Die Gesamtheit aus Abgaskanal und Abgasanlage kann auch als Abgasweg bezeichnet werden.

Die Fördereinrichtung kann dabei einen Regler aufweisen, beispielsweise einen Drehzahlregler einer als Gebläse ausgebildeten Fördereinrichtung, der mittels eines Steuersignals, häufig ein pulsweitenmoduliertes (PWM-) Signal eine vorgegebene Drehzahl des Gebläses regelt.

Der Brenner kann mindestens ein flaches Lochblech oder ein Lochblech in Zylinderform umfassen, das zwischen einem Brennerhohlraum und der Brennkammer angeordnet ist. Der Brennerhohlraum kann derart mit dem Gemischkanal verbunden sein, dass Verbrennungsgemisch aus dem Gemischkanal durch den Brennerhohlraum strömen, aus dem Lochblech austreten und dort verbrannt werden kann. Im Bereich des Lochbleches kann zudem eine Zündeinrichtung angeordnet sein, dazu eingerichtet, einen durch das Lochblech austretenden Massestrom Verbrennungsgemisch zu entzünden. Der Brenner kann an einer Brennertür einer Brennkammer des Heizgerätes angeordnet sein. Die Brennertür kann eine Durchströmungsöffnung aufweisen, die den Gemischkanal des Heizgerätes mit dem Brennerhohlraum verbinden kann. Ein Brenner in Zylinderform kann zur Befestigung an der Brennertür einen Flansch aufweisen, der beispielsweise mittels einer Schraubverbindung mit der Brennertür verbunden werden kann. Zwischen Brenner und Brennertür ist in der Regel noch eine Dichtung, beispielsweise eine hochtemperaturstabile Graphit- Dichtung angeordnet.

Der Brenner kann (mindestens) eine Flammensperre umfassen, die derart im Brennerhohlraum ausgebildet und angeordnet ist, dass zum Lochblech strömendes Verbrennungsgemisch die Flammensperre durchdringen muss. Mit anderen Worten kann die Flammensperre den gesamten vorhandenen Strömungsquerschnitt im Brennerhohlraum abdecken, so dass zum Lochblech strömendes Verbrennungsgemisch die Flammensperre durchdringen muss. So kann beispielhaft bei einem in einer Zylinderform ausgebildeten Brenner die Flammensperre gleichfalls in Zylinderform mit weitestgehend konstantem Abstand zum Lochblech ausgebildet sein. Bei einem flachen (ebenen) Lochblech kann entsprechend die Flammensperre gleichfalls flach und eben ausgebildet sein und beabstandet zum Lochblech im Brennerhohlraum angeordnet sein.

Das Heizgerät kann insbesondere die Brennerleistung an den Bedarf anpassen, auch als Modulieren bezeichnet. Hierzu kann bei einem Erkennen eines geänderten Wärmebedarfs, beispielsweise unter Einbeziehung einer Vorlauf- und Rücklauftemperatur eines mit dem Heizgerät verbundenen Heizkreises, ein Regel- und Steuergerät des Heizgerätes eine Leistung der Fördereinrichtung (des Gebläses) des Heizgerätes und damit den Massestrom Verbrennungsluft an den Wärmebedarf anpassen. Gleichzeitig passt eine Regelung den Brennstoffmassestrom an den sich ändernden Massestrom Verbrennungsluft an und regelt somit ein vorgegebenes Verbrennungsluftverhältnis. Häufig wird zur Vermeidung von Flammenrückschlägen in niedrigen Leistungsbereichen das Verbrennungsluftverhältnis angepasst, insbesondere der Anteil Verbrennungsluft erhöht.

Das Heizgerät kann zur Steuerung des Massestromes Brenngas ein Gasventil aufweisen, das in der Regel ein Gassicherheitsventil und ein Gasregelventil umfassen kann. Das Gasregelventil kann dabei insbesondere ein Schrittmotorventil sein, dass einen definierten Massestrom Brenngas einstellen kann. Das Sicherheitsventil soll ein Austreten unverbrannten Brenngases verhindern und wird beispielsweise bei einem Startvorgang des Heizgerätes erst nach dem Anfahren der Fördereinrichtung auf eine, für den Startvorgang geeignete, Startleistung freigegeben.

Zudem kann das Heizgerät eine Flammenüberwachung aufweisen. Hierfür sind verschiedene Verfahren bekannt, insbesondere kann mittels einer Erfassung eines Ionisationsstromes der Flamme eine sichere Flammenüberwachung bereitgestellt werden. Mangels ausreichend freier Ladungsträger bei der Verbrennung von Wasserstoff kann dieses Verfahren jedoch für wasserstoffbetriebene Heizgeräte nicht robust eingesetzt werden. Zur Flammenüberwachung bei wasserstoffbetriebenen Heizgeräten kommen andere Verfahren zum Einsatz, beispielsweise das Erfassen einer Temperatur der Flamme und/oder der von der Flamme emittierten UV- (Ultraviolett-) Strahlung.

Die Flammenüberwachung kann zum Feststellen des Vorhandenseins einer Flamme als auch in die Regelung eines Lambdawertes (Verbrennungsluftverhältnis, Luftzahl) der Verbrennung eingesetzt werden. So kann unter Einbeziehung von Referenzwerten oder einem Referenzkennfeld (Lambda-Regelkurve) einem Signal der Flammenüberwachung (UV- oder Temperatursensor) ein (aktueller) Lambdawert zugeordnet werden. Häufig erfolgt eine Regelung des Lambdas des Heizgerätes mit einem Signal der Flammenüberwachung als Regelgröße. Hierzu kann anhand eines Parameters, der einen Rückschluss auf die Durchflussmenge Verbrennungsluft zulässt, dem Signal der Flammenüberwachung und ein Referenzzusammenhang ein dem Ziel-Lambda entsprechender Signalwert der Flammenüberwachung bestimmt und eingeregelt werden.

Bekannte Regelungen eines Verbrennungsluftverhältnisses benötigen somit die zugeführte Durchflussmenge Verbrennungsluft als Eingangsparameter, um einen entsprechenden Masse- oder Volumenstrom Brennstoff zu bestimmen und zuzuführen. Dieser kann in einem einfachen Verfahren anhand von Betriebsdaten der Fördereinrichtung bestimmt werden. Insbesondere kann hierfür eine Drehzahl einer als Gebläse ausgebildeten Fördereinrichtung oder ein Steuersignal einer Drehzahlregelung herangezogen werden. Nachteilig unterliegen diese Betriebsdaten der Fördereinrichtung einer Vielzahl von Einflussfaktoren, beispielsweise einem Strömungswiderstand einer Abgasanlage, so dass dieses Verfahren häufig nicht ausreichend präzise ist. Alternativ können Durchflusssensoren zum Bestimmen der Durchflussmenge Verbrennungsluft genutzt werden, wobei auch diese ausfallen oder aufgrund eines Sensordrifts ungenaue Werte bereitstellen können. Ein hier vorgeschlagenes Verfahren kann auf einfache Weise ein sicheres Bestimmen einer Durchflussmenge Verbrennungsluft in einem Heizgerät ermöglichen und damit auch zur Verifikation anderweitig bestimmter Durchflussmengen Verbrennungsluft genutzt werden.

In diesem Zusammenhang wird angemerkt, dass eine Durchflussmenge (Verbrennungsluft, Brennstoff oder Gemisch aus beidem) auch als Masse- oder Volumenstrom verstanden werden kann. So ist ein Massestrom in Kenntnis der Dichte und der Temperatur des Mediums einfach in einen Volumenstrom überführbar und umgekehrt.

Im Rahmen eines hier vorgeschlagenen Verfahrens werden mindestens zwei Widerstandswerte eines elektrisch beheizbaren Temperatursensors erfasst, wobei der mindestens eine Temperatursensor beim Erfassen der mindestens zwei Widerstandswerte mit jeweils unterschiedlicher Leistung beaufschlagt (beheizt) wird. Zur Klarstellung wird angemerkt, dass ein Widerstandswert ein gemessener elektrischer Widerstand eines widerstandsbasierten Temperatursensors bezeichnet. Eine unterschiedliche Leistung bezeichnet hier voneinander abweichende Leistungen, wobei zur Gewährleistung einer hohen Genauigkeit der Bestimmung der Durchflussmenge Verbrennungsluft die Leistungen möglichst deutlich voneinander abweichen sollten, beispielsweise kann eine Leistung ein Vielfaches der anderen Leistung sein oder eine Leistung ausreichend zum Messen des Widerstandswertes und eine zweite Leistung erheblich größer und/oder als Vielfaches der ersten Leistung gewählt werden. Dabei können zwei oder mehr Widerstandswerte bei jeweils unterschiedlichen Leistungen erfasst werden, dies können diskrete Werte oder auch ein Verlauf von Werten (eine Funktion) sein. Zum Erfassen der Werte können dabei ein oder mehrere Temperatursensoren genutzt werden.

Anhand der mindestens zwei Widerstandswerte kann eine Durchflussmenge Verbbrennungsluft bestimmt werden. Hierfür kann insbesondere ein Referenzzusammenhang einbezogen werden, der einen Zusammenhang zwischen den erfassten Widerstandswerten bzw. daraus abgeleiteten Größen, mit einer Durchflussmenge Verbrennungsluft bereitstellt. Der Referenzzusammenhang kann beispielsweise im Vorfeld an einem Referenzheizgerät ermittelt worden sein.

Der zum Erfassen der Widerstandswerte genutzte Temperatursensor kann dabei derart angeordnet sein, dass eine Flammentemperatur einer Flamme am Brenner des Heizgerätes erfasst werden kann. Grundsätzlich kann zum Erfassen der Flammentemperatur des Heizgerätes ein beliebiger Temperatursensor eingesetzt werden. Insbesondere kann ein widerstandsbasierter Temperatursensor, beispielsweise ein Heißleiter (NTC) oder Kaltleiter (PTC), ein Platin- oder Silizium-Messwiderstand, oder auch ein Halbleiter-Temperatursensor genutzt werden. Insbesondere kann der zu verwendende Temperatursensor einen positiven Temperaturkoeffizienten aufweisen.

Der Temperatursensor kann dabei vorteilhaft auch andere Funktionen im Heizgerät unterstützen und beispielsweise für eine Flammenüberwachung oder als Zünder genutzt werden. Insbesondere kann der mindestens eine Temperatursensor ein Glühzünder, auch als Hot- Surface-Ignitor bezeichnet, sein. Vorteilhaft ist somit eine Durchführung eines hier vorgeschlagenen Verfahrens ohne zusätzlich zu verbauende Sensorik möglich.

Bei der Nutzung von zwei oder mehr Temperatursensoren können diese bezogen auf den Brenner bzw. auf eine Flamme des Brenners symmetrisch angeordnet sein, wodurch gleiche Temperaturwerte (Messwiderstände) der Temperatursensoren bei vorhandener (ordnungsgemäßer) Flamme zu erwarten sind. Klarstellend wird in diesem Zusammenhang angemerkt, dass auch eine beliebige (unsymmetrische) Anordnung der Temperatursensoren möglich ist, wobei unterschiedliche Positionen der Temperatursensoren bezogen auf den Brenner bzw. einer Flamme des Brenners (rechnerisch) kompensiert werden. Entsprechende Referenzdaten (bzw. eine Transferfunktion) könnte im Vorfeld an einem Referenzheizgerät ermittelt werden.

Gemäß einer Ausgestaltung können zwei Temperatursensoren eingesetzt werden, wobei ein erster Temperatursensor mit einer ersten Leistung betrieben wird und einen ersten Widerstandswert bereitstellt und ein Temperatursensor mit einer zweiten Leistung betrieben wird und einen zweiten Widerstandswert bereitstellt. Mit anderen Worten kommen zwei Temperatursensoren zum Einsatz die mit unterschiedlichen Leistungen betrieben werden und deren Widerstand erfasst wird.

Dabei wird mindestens ein Temperatursensor mit einer alternierenden Funktion als Leistungsfunktion beaufschlagt. Die alternierende Funktion ist eine Winkelfunktion. Es kann eine Widerstandsfunktion des mindestens einen Temperatursensors erfasst werden, wobei eine Phasenverschiebung und/ oder eine Änderung der Amplituden der Widerstandsfunktion gegenüber der Leistungsfunktion in die Bestimmung der Durchflussmenge Verbrennungsluft einfließen kann.

Nach einem weiteren Aspekt wird ein Verfahren zum Betreiben eines Heizgerätes vorgeschlagen, bei dem eine Durchflussmenge Verbrennungsluft ermittelt und zu einem hier vorgeschlagenen Verfahren herangezogen wird. Die Durchflussmenge Verbrennungsluft kann insbesondere zur Regelung des Verbrennungsluftverhältnisses der Verbrennung genutzt werden.

Nach einem weiteren Aspekt wird auch ein Regel- und Steuergerät für ein Heizgerät vorgeschlagen, eingerichtet zur Durchführung eines hier vorgeschlagenen Verfahrens. Das Regel- und Steuergerät kann hierzu beispielsweise einen Prozessor aufweisen, und/ oder über diesen verfügen. In diesem Zusammenhang kann der Prozessor beispielsweise das auf einem Speicher (des Regel- und Steuergeräts) hinterlegte Verfahren ausführen. Das Regel- und Steuergerät kann hierfür insbesondere mit einer Fördereinrichtung, einer Drosseleinrichtung, einem Gasventil und/ oder einem Durchflusssensor elektrisch verbunden sein. Zudem können auf einem Speicher des Regel- und Steuergerätes im Rahmen der Durchführung eines hier vorgeschlagenen Verfahrens erfasste oder benötigte Daten hinterlegt werden, beispielsweise ein Referenzzusammenhang.

Nach einem weiteren Aspekt wird auch ein Heizgerät vorgeschlagen, eingerichtet zur Verbrennung eines Verbrennungsgemisches aus Verbrennungsluft und Brenngas. Bei dem Heizgerät kann es sich um ein Gasheizgerät, insbesondere um ein wasserstoffbetriebenes Gasheizgerät, handeln. Das Gasheizgerät kann einen Brenner und eine Fördereinrichtung aufweisen, mit der ein Gemisch aus Brennstoff (Wasserstoff) und Verbrennungsluft dem Brenner über einen Gemischkanal zugeführt werden kann. Das Heizgerät kann einen Temperatursensor aufweisen, der derart angeordnet sein kann, dass eine Flammentemperatur am Brenner des Heizgerätes erfasst werden kann. Das Heizgerät kann eine Flammenüberwachung aufweisen, wobei ein Signal derselben zur Regelung des Verbrennungsluftverhältnisses der Verbrennung genutzt werden kann. Das Heizgerät kann zudem weitere Mittel aufweisen, die so angepasst sind, dass sie die Schritte des hier offenbarten Verfahrens ausführen. Die Mittel können ein Regel- und Steuergerät umfassen.

Gemäß einer Ausgestaltung kann das Heizgerät einen Durchflusssensor in einer Zuführung Verbrennungsluft zum Erfassen der Durchflussmenge Verbrennungsluft aufweisen. Ein hier vorgeschlagenes Verfahren kann bei einem derartigen Heizgerät insbesondere zur Verifikation eines Signals des Durchflusssensors genutzt werden.

Nach einem weiteren Aspekt wird auch ein Computerprogramm vorgeschlagen, welches zur (zumindest teilweisen) Durchführung eines hier vorgestellten Verfahrens auf einem hier vorgeschlagenen Heizgerät eingerichtet ist. Dies betrifft mit anderen Worten insbesondere ein Computerprogramm (-produkt), umfassend Befehle, die bei der Ausführung des Programms durch einen Computer, diesen veranlassen, ein hier vorgeschlagenes Verfahren auszuführen. Das Computerprogramm kann insbesondere auf einem Regel- und Steuergerät eines hier vorgeschlagenen Heizgerätes durchgeführt werden.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch eine Verwendung mindestens zweier erfasster Widerstandswerte mindestens eines beheizbaren Temperatursensors, der derart angeordnet ist, dass eine Temperatur einer Flamme eines Heizgerätes erfasst werden kann. Der mindestens eine Temperatursensor kann beim Erfassen der mindestens zwei Widerstandswerte mit jeweils abweichender Leistung beaufschlagt werden. Die Widerstandwerte können zum Bestimmen einer Durchflussmenge Verbrennungsluft in einem Strömungsweg des Heizgerätes verwendet werden.

Die im Zusammenhang mit dem Verfahren erörterten Details, Merkmale und vorteilhaften Ausgestaltungen können entsprechend auch bei dem hier vorgestellten Computerprogramm, dem Regel- und Steuergerät, dem Heizgerät und der Verwendung auftreten und umgekehrt. Insoweit wird auf die dortigen Ausführungen zur näheren Charakterisierung der Merkmale vollumfänglich Bezug genommen.

Insbesondere wird hier eine Luftmassenstrommessung mittels HSI(s) angegeben, welche positive Temperaturkoeffizienten aufweisen. Sie können für eine Verbrennungsregelung eingesetzt werden, weil ihr elektrischer Widerstand über die Temperatur von dem Verbrennungsluftverhältnis abhängt. Die Grundlage dieser Luftmassenstrommessung besteht darin, den thermischen Widerstand zwischen Temperatursensor (HSI) und der Umgebung (Flamme) zu messen und anhand dessen den Massenstrom zu bestimmen. Bei steigendem Massenstrom sinkt der thermische Widerstand, sodass zur Konstanthaltung der Temperatur des Temperatursensors eine größere Heizleistung des Temperatursensors erforderlich ist. Nachfolgend werden drei verschiedene Ansätze zur Realisierung dargestellt, bei denen ausschließlich elektrische Größen betrachtet werden.

Gemäß einem ersten Ansatz können zwei elektrische Widerstandswerte von zwei Temperatursensoren erfasst werden. Die beiden Temperatursensoren können dabei mit abweichenden (Heiz)Leistungen betrieben werden und insbesondere bezogen auf den Brenner eine symmetrische Anordnung aufweisen.

Gemäß einem zweiten Ansatz kann ein Temperatursensor aufeinanderfolgend eine erste Leistung einstellen und einen ersten Widerstandswert erfassen und nachfolgend eine zweite Leistung einstellen und einen zweiten Widerstandswert erfassen. Dieser Ansatz kann auch dauerhaft oder temporär wiederholt werden, wobei ein aufeinanderfolgendes Einstellen von erster und zweiter Leistung eine Rechteckfunktion ergeben kann.

Gemäß einem dritten Ansatz kann bei einem Temperatursensor eine Leistung in Form einer Winkelfunktion (Sinus, Cosinus) eingestellt und die Widerstandsfunktion des Temperatursensors erfasst werden. Auf den Massestrom kann anhand der Phasenverschiebung und der Änderung der Amplitude zwischen Widerstandsfunktion und Leistungsfunktion rückgeschlossen werden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Hier werden somit ein Verfahren zum Betreiben eines Heizgerätes, ein Computerprogramm, ein Regel- und Steuergerät und ein Heizgerät angegeben, welche die mit Bezug auf den Stand der Technik geschilderten Probleme zumindest teilweise lösen. Insbesondere tragen das Verfahren zum Betreiben eines Heizgerätes, das Computerprogramm, das Regel- und Steuergerät und das Heizgerät zumindest dazu bei, ein Unterschwingen des Lambdawertes der Verbrennung aufgrund von schnellen Modulationen des Heizgerätes oder (externen) Störungen zu kompensieren und damit die Betriebssicherheit eines Heizgerätes deutlich zu erhöhen, indem Flammenrückschläge wirkungsvoll verhindert werden können.

Zudem kann die Erfindung ohne oder nur mit geringen baulichen Änderungen an einem Heizgerät umgesetzt werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein hier vorgeschlagenes Heizgerät,
- Fig. 2:: eine Anordnung von zwei Temperatursensoren an einem Brenner eines hier vorgeschlagenen Heizgerätes, und
- Fig. 3 bis 6:: Parameterverläufe, die sich bei Durchführung eines hier vorgeschlagenen Verfahrens einstellen können.

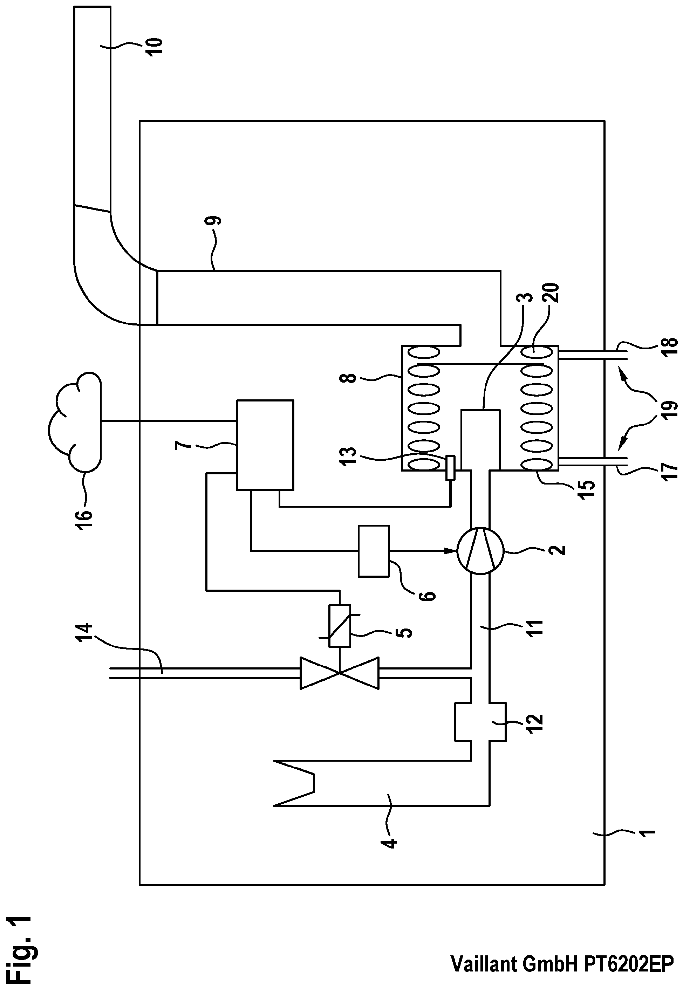

Fig. 1 zeigt beispielhaft und schematisch ein hier vorgeschlagenes Heizgerät 1. Dieses kann einen in einer Brennkammer 8 angeordneten Brenner 3 umfassen. Der Brenner 3 kann die Form eines Hohlzylinders aufweisen, wobei im Inneren ein Brennerhohlraum ausgebildet sein kann. Im Brennerhohlraum kann eine Flammensperre parallel zur Oberfläche des Brenners 3 bzw. konzentrisch zu dieser ausgerichtet sein und den gesamten, im Brennerhohlraum zur Verfügung stehenden Strömungsquerschnitt abdecken.

Über eine Zuführung Verbrennungsluft 4 kann Verbrennungsluft durch eine Fördereinrichtung 2, insbesondere als Gebläse ausgebildet, angesaugt werden. In der Zuführung Verbrennungsluft kann ein Durchflusssensor 12 angeordnet sein. Die Fördereinrichtung 2 kann mit einem Drehzahlregler 6 verbunden sein, der mittels eines pulsweitenmodulierten (PWM-) Signals eine Drehzahl n der Fördereinrichtung 2 regeln kann. Ein Gasventil 5 kann dem angesaugten Luftmassenstrom Verbrennungsluft Brenngas aus einer Gaszuführung 14 zusetzen und ein Sicherheitsventil sowie ein Gasregelventil zur Steuerung des zuzusetzenden Massestromes Brenngas umfassen. Das erzeugte Gemisch aus Brenngas und Verbrennungsluft kann über einen Gemischkanal 11 zum Brenner 3 strömen und dort von der Zündeinrichtung entzündet werden. Der Brenner 3 kann eine Zylinderform aufweisen, die mit einer Grundfläche an einer Brennertür 15 derart befestigt sein kann, dass Verbrennungsgemisch aus dem Gemischkanal in den Brenner 3 strömen kann. Bei der Verbrennung entstehende Wärme kann über einen Wärmtauscher 20 auf einen Heizkreis 19 übertagen werden, über dessen Heizungsvorlauf 17 Wärmeträger des Heizkreises 19 zugeführt und über einen Heizungsrücklauf 18 zum Heizgerät 1 rückgeführt werden kann. Die Verbrennungsprodukte können nach der Verbrennung über ein Abgasrohr 9 des Heizgerätes 1 und eine mit dem Heizgerät 1 verbundene Abgasanlage 10 nach Außen abgeleitet werden.

Das hier vorgeschlagenen Heizgerät 1 kann insbesondere zur Verbrennung von Wasserstoff eingerichtet sein. Zudem kann das Heizgerät 1 an/ bzw. in der Brennertür 15 einen Temperatursensor 13 aufweisen, der zur Erfassung einer Temperatur einer Flamme am Brenner 3 eingerichtet ist. Der Temperatursensor 13 kann insbesondere als Glühzünder ausgebildet sein und auch als Zündeinrichtung des Heizgerätes 1 dienen. Nicht zuletzt kann der Temperatursensor 12 auch zur Flammenüberwachung des Heizgerätes 1 genutzt werden, indem eine Flammentemperatur überwacht wird. Die Flammenüberwachung kann zum Erkennen des Vorhandenseins einer Flamme als auch zur Regelung des Verbrennungsluftverhältnisses der Verbrennung genutzt werden.

Ein Regel- und Steuergerät 7 kann zur Regelung des Heizgerätes 1 eingerichtet sein. Hierfür kann dieses beispielsweise mit dem Drehzahlregler 6, der Fördereinrichtung 2, dem Gasventil 5, dem Temperatursensor 13, dem Durchflusssensor 12 und einem Netzwerk 16 (Internet) elektrisch verbunden sein. Das Regel- und Steuergerät 7 kann zur Durchführung eines hier vorgeschlagenen Verfahrens eingerichtet sein.

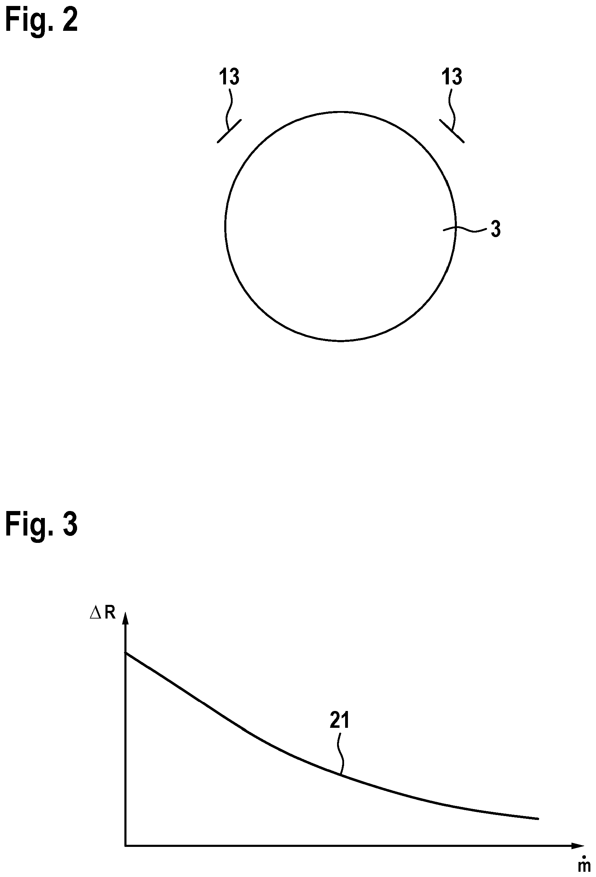

Fig. 2 zeigt beispielhaft und schematisch eine Anordnung von zwei Temperatursensoren 13 an einem Brenner 3. Der Brenner 3 hat im Beispiel eine Zylinderform mit einer kreisrunden Grundfläche, wobei Verbrennungsgemisch aus in der Mantelfläche angeordneten Löchern ausströmen kann. In der Fig. 2 ist eine Draufsicht auf die Grundfläche gezeigt und die symmetrische Position der beiden Temperatursensoren 13 bezogen auf den Brenner 3 bzw. auf eine sich am Brenner 3 ausbildende Flamme. Insbesondere sind durch die symmetrische Anordnung gleiche Temperatursignals der beiden Temperatursensoren 13 bei einer ordnungsgemäßen Flamme zu erwarten.

Fig. 3 zeigt beispielhaft einen Referenzzusammenhang 21 einer Differenz der Widerstandswerte 24, 25 der beiden Temperatursensoren aus Fig. 2 in Abhängigkeit des Massestromes Verbrennungsluft *ṁ*. Hierzu wurden die beiden Temperatursensoren 13 mit abweichenden Leistungen betrieben, beispielsweise 1 Watt und 10 Watt. Anhand des Referenzzusammenhanges 21 und zwei erfassten Widerstandswerten 24, 25 der Temperatursensoren 13 kann somit ein Massestrom Verbrennungsluft *ṁ* gemäß einem hier vorgeschlagenen Verfahren bestimmt werden.

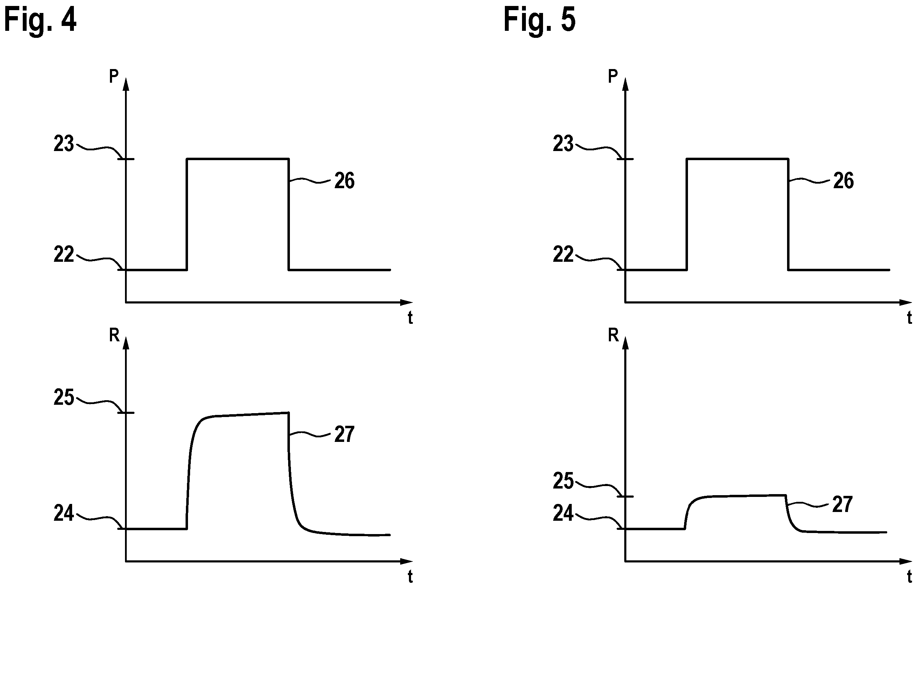

Fig. 4 zeigt beispielhaft und schematisch eine Leistungsfunktion 26, hier eine Rechteckfunktion, mit der ein erster Leistungswert 22 und ein zweiter Leistungswert 23 eingestellt werden. Unten in der Fig. 4 ist eine der Leistungsfunktion 26 entsprechende Widerstandsfunktion 27 bei einem geringen Massestrom Verbrennungsluft *ṁ* ersichtlich.

Fig. 5 stellt die Widerstandsfunktion 27 aus Fig. 5 die Widerstandsfunktion 27 für einen hohen Massestrom Verbrennungsluft *ṁ* gegenüber. Gut erkennbar sinkt eine Differenz von erstem Widerstandswert 24 und zweiten Widerstandswert 25 mit steigendem Massestrom *ṁ*.

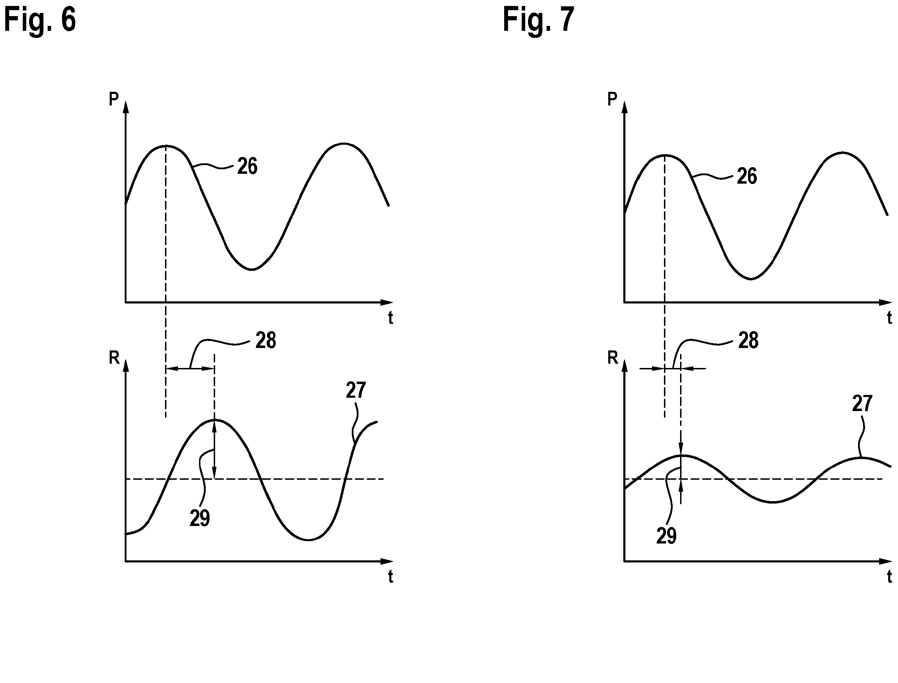

In Analogie zu Fig. 4 zeigt die Fig. 6 eine Leistungsfunktion 26 in Form einer Sinusfunktion und die entsprechende Widerstandsfunktion 27 für einen geringen Massestrom Verbrennungsluft *ṁ*. Fig. 7 zeigt die Funktionen gemäß Fig. 6 für einen hohen Massestrom Verbrennungsluft *ṁ.* Zur Bestimmung des Massestromes Verbrennungsluft *ṁ* kann eine Amplitude 29 und eine Phasenverschiebung 28 herangezogen werden. Gut erkennbar sinken Amplitude 29 und Phasenverschiebung 28 mit steigendem Massestrom Verbrennungsluft *ṁ* an.

### Bezugszeichenliste

- 1: Heizgerät
- 2: Fördereinrichtung
- 3: Brenner
- 4: Zuführung Verbrennungsluft
- 5: Gasventil
- 6: Drehzahlregler
- 7: Regel- und Steuergerät
- 8: Brennkammer
- 9: Abgasrohr
- 10: Abgasanlage
- 11: Gemischkanal
- 12: Durchflusssensor
- 13: Temperatursensor
- 14: Gaszuführung
- 15: Brennertür
- 16: Netzwerk
- 17: Heizungsvorlauf
- 18: Heizungsrücklauf
- 19: Heizkreis
- 20: Wärmetauscher
- 21: Referenzzusammenhang
- 22: erster Leistungswert
- 23: zweiter Leistungswert
- 24: erster Widerstandswert
- 25: zweiter Widerstandswert
- 26: Leistungsfunktion
- 27: Widerstandsfunktion
- 28: Phasenverschiebung
- 29: Amplitude

## Patentansprüche

1. Verfahren zum Bestimmen einer Durchflussmenge Verbrennungsluft in einem Heizgerät (1) aufweisend einen Brenner (3), dem mittels einer Fördereinrichtung (2) ein Gemisch aus Brenngas und Verbrennungsluft über einen Gemischkanal (11) zugeführt wird und mindestens einen elektrisch beheizbaren Temperatursensor (13), derart angeordnet, dass eine Temperatur einer Flamme des Heizgerätes (1) erfasst werden kann, dadurch gekennzeichent, dass
- mindestens zwei elektrische Widerstandswerte (24, 25) des mindestens einen Temperatursensors (13) erfasst werden, wobei der mindestens eine Temperatursensor (13) beim Erfassen der mindestens zwei Widerstandswerte (24, 25) mit jeweils abweichender elektrischer Leistung beaufschlagt wird, und
- eine Durchflussmenge Verbrennungsluft durch Auswerten der mindestens zwei Widerstandswerte (24, 25) bestimmt wird, wobei mindestens ein Temperatursensor (13) mit einer alternierenden Funktion als Leistungsfunktion (26) beaufschlagt und eine Widerstandsfunktion (27) erfasst wird und die alternierende Funktion eine Winkelfunktion ist und eine Amplitude (29) und Phasenverschiebung (28) zwischen der Leistungsfunktion (26) und der Widerstandsfunktion (27) ausgewertet wird.

2. Verfahren nach Anspruch 1, wobei mindestens ein Temperatursensor (13) ein Glühzünder (Hot Surface Ignitor (HSI)) ist.

3. Verfahren nach einem der vorangehenden Ansprüche, wobei ein erster Widerstandswert (24) eines ersten Temperatursensors (13) erfasst wird, der mit einem ersten Leistungswert (22) betrieben wird und ein zweiter Widerstandswert (25) eines zweiten Temperatursensors (13) erfasst wird, der mit einem zweiten Leistungswert (23) beaufschlagt wird.

4. Verfahren nach Anspruch 3, wobei erster und zweiter Temperatursensor (13) symmetrisch bezogen auf den Brenner (3) angeordnet sind.

5. Verfahren zum Betreiben eines Heizgerätes (1), wobei zur Regelung des Heizgerätes (1) eine, mit einem Verfahren nach einem der vorangehenden Ansprüche, ermittelte Durchflussmenge herangezogen wird.

6. Regel- und Steuergerät (7) für ein Heizgerät (1) aufweisend einen Brenner (3), dem mittels einer Fördereinrichtung (2) ein Gemisch aus Brenngas und Verbrennungsluft über einen Gemischkanal (11) zugeführt wird und mindestens einen elektrisch beheizbaren Temperatursensor (13), derart angeordnet, dass eine Temperatur einer Flamme des Heizgerätes (1) erfasst werden kann, wobei das Regel- und Steuergerät (7) zur Durchführung eines Verfahrens nach einem der vorangehenden Ansprüche eingerichtet ist.

7. Heizgerät (1), zumindest aufweisend einen Brenner (3), eine Fördereinrichtung (2), dazu eingerichtet dem Brenner (3) ein Gemisch aus einem Brenngas und Verbrennungsluft zuzuführen, mindestens einen elektrisch beheizbaren Temperatursensor (13), derart angeordnet, dass eine Temperatur einer Flamme des Brenners (3) erfassbar ist sowie ein Regel- und Steuergerät (7) nach Anspruch 6.

8. Computerprogramm umfassend Befehle, die bewirken, dass bei Ausführung durch ein Regel- und Steuergerät (7) nach Anspruch 6 das Heizgerät (1) nach Anspruch 7 ein Verfahren nach einem der Ansprüche 1 bis 5 ausführt.

## Claims

1. A method for determining the flow rate of combustion air in a heating appliance (1) comprising a burner (3), to which a mixture of fuel gas and combustion air is supplied via a mixture duct (11) by means of a conveying device (2), and at least one electrically heatable temperature sensor (13), arranged such that the temperature of a flame in the heating appliance (1) can be detected, **characterised in that**
- at least two electrical resistance values (24, 25) of the at least one temperature sensor (13) are measured, whereby the at least one temperature sensor (13) is subjected to different electrical power levels when measuring the at least two resistance values (24, 25), and
- a flow rate of combustion air is determined by evaluating the at least two resistance values (24, 25), wherein at least one temperature sensor (13) is subjected to an alternating function as a power function (26) and a resistance function (27) is measured, and the alternating function is a trigonometric function with an amplitude (29) and a phase shift (28) between the power function (26) and the resistance function (27) are evaluated.

2. A method according to claim 1, wherein at least one temperature sensor (13) is a hot surface ignitor (HSI).

3. A method according to one of the preceding claims, wherein a first resistance value (24) of a first temperature sensor (13) is measured whilst it is operated at a first power level (22), and a second resistance value (25) of a second temperature sensor (13) is measured whilst it is supplied with a second power level (23).

4. A method according to claim 3, wherein the first and second temperature sensors (13) are arranged symmetrically with respect to the burner (3).

5. A method for operating a heating appliance (1), wherein a flow rate determined using a method according to one of the preceding claims is used to control the heating appliance (1).

6. A regulation and control unit (7) for a heating appliance (1) comprising a burner (3), to which a mixture of fuel gas and combustion air is supplied via a mixture duct (11) by means of a delivery device (2), and at least one electrically heated temperature sensor (13) arranged such that the temperature of a flame of the heating appliance (1) can be detected, wherein the regulating and control unit (7) is configured to carry out a method according to one of the preceding claims.

7. Heating appliance (1), comprising at least a burner (3), a conveying device (2), designed to supply the burner (3) with a mixture of a fuel gas and combustion air, at least one electrically heatable temperature sensor (13), arranged such that the temperature of a flame of the burner (3) can be detected, and a regulating and control unit (7) as per claim 6.

8. A computer program comprising instructions which, when executed by a regulation and control unit (7) according to claim 6, cause the heating appliance (1) according to claim 7 to carry out a method according to one of claims 1 to 5.

## Revendications

1. Procédé destiné à la détermination d'un débit d'air de combustion dans un appareil de chauffage (1) présentant un brûleur (3) auquel est amené un mélange de gaz de combustion et d'air de combustion par le biais d'un canal de mélange (11) au moyen d'un équipement de transport (2) et au moins un capteur de température (13) pouvant être chauffé électriquement disposé de telle sorte qu'une température d'une flamme de l'appareil de chauffage (1) peut être détectée, **caractérisé en ce que**
- au moins deux valeurs de résistance électrique (24, 25) de l'au moins un capteur de température (13) sont détectées, dans lequel l'au moins un capteur de température (13) est alimenté en puissance électrique respectivement différente lors de la détection des au moins deux valeurs de résistance (24, 25), et
- un débit d'air de combustion est déterminé par le biais de l'analyse des au moins deux valeurs de résistance (24, 25) dans lequel une fonction alternée est appliquée à au moins un capteur de température (13) en tant que fonction de puissance (26) et une fonction de résistance (27) est détectée, et la fonction alternée est une fonction angulaire et une amplitude (29) et un décalage de phase (28) entre la fonction de puissance (26) et la fonction de résistance (27) sont évalués.

2. Procédé selon la revendication 1, dans lequel au moins un capteur de température (13) est un allumeur à incandescence (allumeur à surface chaude (HSI)).

3. Procédé selon l'une quelconque des revendications précédentes, dans lequel une première valeur de résistance (24) d'un premier capteur de température (13) est détectée qui est actionné avec une première valeur de puissance (22) et une seconde valeur de résistance (25) d'un second capteur de température (13) auquel est appliqué une seconde valeur de puissance (23) est détectée.

4. Procédé selon la revendication 3, dans lequel un premier et un second capteur de température (13) sont disposés de manière symétrique par rapport au brûleur (3).

5. Procédé destiné au fonctionnement d'un appareil de chauffage (1), dans lequel un débit déterminé avec un procédé selon l'une quelconque des revendications précédentes est utilisé pour le réglage de l'appareil de chauffage (1).

6. Appareil de réglage et de commande (7) pour un appareil de chauffage (1) présentant un brûleur (3) auquel est amené un mélange de gaz de combustion et d'air de combustion par le biais d'un canal de mélange (11) au moyen d'un équipement de transport (2) et au moins un capteur de température (13) pouvant être chauffé électriquement disposé de telle sorte qu'une température d'une flamme de l'appareil de chauffage (1) peut être détectée, dans lequel l'appareil de réglage et de commande (7) est conçu pour la mise en œuvre d'un procédé selon l'une quelconque des revendications précédentes.

7. Appareil de chauffage (1), présentant au moins un brûleur (3), un équipement de transport (2) qui est conçu pour amener au brûleur (3) un mélange d'un gaz de combustion et d'air de combustion, au moins un capteur de température (13) pouvant être chauffé électriquement est disposé de telle sorte qu'une température d'une flamme du brûleur (3) peut être détectée, ainsi qu'un appareil de réglage et de commande (7) selon la revendication 6.

8. Programme informatique comprenant des ordres qui, lorsqu'ils sont exécutés par un appareil de réglage et de commande (7) selon la revendication 6, amènent l'appareil de chauffage (1) selon la revendication 7 à exécuter un procédé selon l'une quelconque des revendications 1 à 5.
